# EUROPEAN PATENT APPLICATION

(11) **EP 3 160 078 A1**
(43) Date of publication of application: **26.04.2017**
(21) Application number: 15306689.9
(22) Date of filing: 21.10.2015
(51) Int. Cl.: H04L 9/00, H04L 9/32

(54) **NETWORK, METHOD AND CERTIFICATE FOR PROVIDING A SECURED COMMUNICATION BETWEEN DEVICES, AND RESPECTIVE DEVICE**

(71) Applicant: Thomson Licensing, 92130 Issy-les-Moulineaux (FR)
(72) Inventor: De Smedt, Alex, 2250 Olen (BE); Martens, Kristof, 3020 Herent (BE)
(74) Representative: Huchet, Anne

(57) **Abstract**

A network comprises devices, at least one certificate authority and certificates to establish a secured communication between the devices, wherein the certificates include a reference (23) to the devices and an identity reference (21, 24) including a value to establish a chronological history of the certificates. The latest certificate is valid over the previous certificates, and the devices communicate with each other by using the latest certificate. The certificates represent in particular a linear chain structure of certificates based on the identity reference, wherein the linear chain structure reflects the chronological history. A new certificate is generated, if: a new certificate authority has to be included for the network, a certificate authority has to be removed from a certificate authority list, or a new device has to be removed or included in the network.

## Description

### TECHNICAL FIELD

The present disclosure concerns trust relations within a network, in particular a public key infrastructure for handling of trust relations between devices of the network.

### BACKGROUND

A public key infrastructure (PKI) is a system for creating, managing and revoking of digital certificates, also known as public key certificates. PKI uses in particular asymmetric cryptography with a key pair including a public key and a private key. A digital certificate includes usually a public key and the identity of the issuer of the certificate. Trusted digital certificates are widely used to make secure connections between devices within a network. A PKI may include a certificate authority (CA), which is an entity issuing the digital certificates. A digital certificate is called in this disclosure "certificate" for the sake of simplicity, and the term "certificate" is used throughout the remaining disclosure.

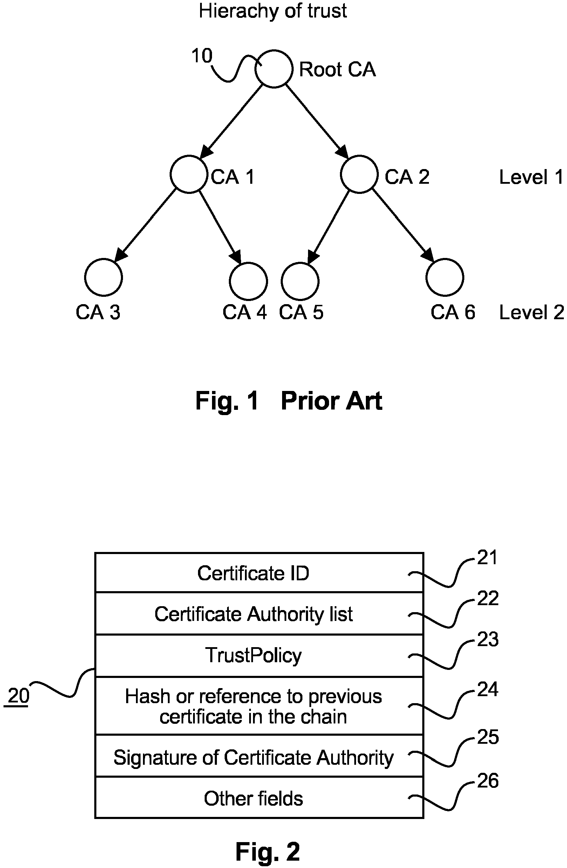

Certificates are verified by using a chain of trust. The trust anchor for a certificate is a root certificate from a CA. A root certificate is the top-most certificate of a certificate tree or of a certificate chain. A tree structure of certificates is shown in figure 1. A root certificate 10, issued by a CA, establishes the highest level of a hierarchy of trust. The root certificate 10 is used in this embodiment to issue certificates CA1 and CA2, which establish a first, lower level in the certificate hierarchy, level 1. The certificate CA1 is used to issue certificates CA3 and CA4, and the certificate CA2 is used to issue certificates CA5 and CA6, wherein the certificates CA3-CA6 establish a second level in the hierarchy of trust, level 2.

A certificate hierarchy establishes a hierarchy of trust and is a relationship of certificates that allows individuals to verify the validity of a certificate's issuer. Certificates are issued based on certificates that reside higher in the certificate hierarchy. A chain of trust of a certificate chain is an ordered list of certificates, containing an end-user certificate and intermediate certificates, issued by an intermediate CA, that enables the end-user to verify that a particular certificate and all intermediates certificates are trustworthy. To facilitate this process of verifying a chain of trust, every certificate includes for example fields "Issued To" (identifying the owner) and "Issued By" (identifying the CA).

In order for a certificate to be trusted, and often for a secure connection to be established at all, that certificate must have been issued by a CA that is included in a trusted store of a public key infrastructure that is connecting, or is related to that trusted CA. If the certificate was not issued by a trusted CA, a connecting application of a device will then check to see if the certificate of the issuing CA was issued by a trusted CA, and so on until either a trusted CA is found (at which point a trusted, secure connection will be established) or no trusted CA can be found (at which point the device will usually display an error message or a warning message.

The context of this disclosure is related to distributed devices and applications that securely communicate with each other, e.g. in a home network or in an enterprise network, in order to operate properly. There is a need for a mechanism of establishing trust when it is not possible to rely on an Internet connectivity or always on security managers to update trust policies when needed. Topics for such a system are:
- Need for multiple CAs because CAs can run on specific devices.
- Need for an efficient mechanism to distribute trust between multiple devices and/or applications that are not available all the time, because CAs and devices, respectively applications, can come and go.
- Need for efficiently revoking trust for devices and applications
- Need for revoking trust of specific CAs when they become compromised.

Certificates include in particular public keys and are signed by a private key that can be verified with the issuer's public key. Certificates are public and include the digital signature to not become compromised. But a public key and a private key can be compromised for any reason. If in such a case a certificate is no longer trusted, this can be handled usually with revocation lists, which are basically digitally signed revocation lists of certificates that should no longer be trusted. A problem that can occur in distributed systems is: what if a root CA issuing the revocation list can also no longer be trusted. This is a problem that can occur in distributed systems where there are potentially multiple CAs who need to have exactly the same rights.

A Certificate is no longer trusted for example if the certificate is resident on a device which was stolen or lost. This may also happen when a family member leaves a home and the devices of the family member should be removed from a home network, e.g. in case of a divorce, a child is getting married and moving out of the house, or a friend is no longer trusted, etc.

For the example, if in figure 1 the certificate of CA2 is no longer trusted, also the certificates of CA5 and CA6 are no longer trusted. So the disadvantage of the present solution is the (multi-)dependency of certificates, but in addition the lack of a solution to deal with the problem when a certificate gets untrusted for some reason.

There are two types of problems:
- CA's or issuers of certificates can more easily get compromised in distributed systems where CA's can reside on many devices. Usually doesn't happen a lot and it is very hard to recover from this.
- Devices or applications that have received a certificate are no longer trusted. Is more likely to occur, and is usually handled by revocation lists

An additional issue is the problem of "offline" devices and applications. There is an issue to update policies and revocation lists of devices when it cannot be guaranteed that both devices and/or applications and CAs are available at the same time. It must be assured in some way that all devices, respectively applications have the latest security policy installed in that kind of environment.

A block chain, described for example in: en.wikipedia.org/wiki/Block_chain, is a distributed database that maintains a continuously growing list of data records that are secured against a revision, for example a list of transactions for crypto currencies, such as Bitcoin. Bitcoin is a payment system for a crypto currency released as open-source software, wherein users can transact directly with each other, and money transactions are verified by network nodes and recorded in a public distributed ledger called block chain.

The present disclosure overcomes one or more of these or other problems.

### SUMMARY

A network comprises devices, at least one certificate authority and certificates to establish a secured communication between the devices, wherein the certificates include a reference to the devices and an identity reference including a value to establish a chronological history of the certificates. The latest certificate is valid over the previous certificates, and the devices communicate with each other by using the latest certificate. The value is for example an integer or hexadecimal number or any other alphanumerical value. The certificates represent in particular a linear chain structure of certificates based on the identity reference, wherein the linear chain structure reflects the chronological history.

In an aspect of the disclosure, two devices of the network first exchange their certificates before they start communicating, and in case their certificates are different, then the device having the latest certificate will make an update with the newer certificate of the other device, to enable the secured communication between the two devices.

In a preferred embodiment, the certificates include further one or more valid certificate authorities, a trust policy including the reference to the devices and indicating the trusted devices of the network, a reference to the previous certificate, e.g. a hash based on the previous certificate, and/or a signature of the certificate authority issuing the certificate. The identity reference is in particular a certificate identifier or the hash based on the previous certificate.

A method for establishing a secured communication for a first device with a second device, wherein the first device has a first certificate and the second device has a second certificate and each certificate includes a reference to the devices and an identity reference comprising a value to establish a chronological history of certificates, the method comprising:
sending the certificate of the first device to the second device, for exchanging their certificates,
receiving the second certificate in the first device,
analysing the second certificate in the first device, and in case of
   a) the first certificate is older than the second certificate, replacing its certificate in the first device with the second certificate, and starting a secured communication with the second device,
   b) the second certificate is older than the first device, waiting until the second device has replaced its certificate with the first certificate, to enable a secured communication with the second device, and
   c) the first certificate corresponds with the second certificate, starting a secured communication with the second device.

A certificate for providing a secured communication between trusted devices of a network includes one or more certificate authorities, a reference to all of the trusted devices of the network, an identity reference including a value establishing a chronological history of certificates, and a signature of the certificate authority issuing the certificate.

The two devices are in particular a part or included in a secure network, and the method comprises further: generating a new certificate in the first device by a certificate authority and distributing the new certificate to the second devices in case of: a new device has to be included to the network or removed from the network, and a new certificate authority has to be included to the secured network or removed from the network.

A device includes a processor being adapted to perform the method.

A computer program comprises executable program code for performing the method.

A non-transitory program storage medium, readable by a processor, comprises executable program code for performing the method.

### BRIEF DESCRIPTION OF THE DRAWINGS

Exemplary embodiments of the present disclosure are explained in more detail below by way of example with reference to schematic drawings, which show:
- Fig. 1: a tree structure of certificates according to prior art,
- Fig. 2: fields of a certificate according to the present disclosure,
- Fig. 3: a method for generating and installing a new certificate for a trusted network,
- Fig. 4: devices to be provisioned for establishing a trusted network,
- Fig. 5: certificates being generated for the devices of figure 4, and
- Fig. 6: a linear chain of certificates as generated in figure 5.

It should be understood that the drawings are for purposes of illustrating the concepts of the disclosure and is not necessarily the only possible configuration for illustrating the disclosure.

### DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure describes a system and a method for providing security, which are applied in a network, for example in a home network or any other private network, an enterprise network or any subnetwork, so that signing authorities and devices attached to the network can always be trusted to communicate among each other. There are two distinct roles that can be taken up in this system:
- a role of issuing of certificates, for example a CA or any other signing authority, and
- a device or application that requests a certificate to exchange information securely with other devices or applications of the network.

On a basis of one or several signing authorities and a linear chain of certificates, security in the home is ensured, which remains secure also after any signing authority, device and/ or some certificates become invalid. This is ensured in a preferred embodiment by:
- Certificates containing an identity reference including a value to establish a chronological history of the certificates, one or more valid signing authorities, a trusted devices list, a reference to the previous certificate, e.g. a hash based on the previous certificate and/or the signature of the signed authority issuing the certificate. The value is for example an integer or hexadecimal number or any other alphanumerical value. The identity reference is for example a certificate identifier or the hash based on the previous certificate.
- One or more signing authorities who can issue the certificates and install them on devices.
- A linear structure of certificates, without any branches or forks, e.g. a linear chain of certificates, which certificates are based on each other and where only the last issued certificate is the valid one.
- The obligation to interchange the latest certificate among trusted devices of the network, so that once there is a communication starting among the devices, the latest certificate is always the one to be verified. This allows for a self-distributing policy of the certificates between the different devices of the network without the need for an always on device that checks who is available at what point in time.

It is noted that in a home network, the home gateway itself may be a certified device. In that case it can be involved in the communication with the devices of the home network.

In a preferred embodiment, the certificates include at least some of the fields as indicated in figure 2:
- A certificate identifier (ID) 21, e.g. a certificate identity number: An ID of the certificate including a number to establish a chronological history of the certificates. This ID identifies uniquely each certificate, wherein the number is changed, e.g. incremented, for every later certificate as generated in the linear chain of certificates.
- A certificate authority list 22: a list of signing authorities, e.g. trusted certificate authorities. The list may include denominations in a format as used for present certificate authorities. The signing authorities have in particular the same rights.
- A trust policy 23: The trust policy includes a list of trusted devices, advantageously a list of public keys representing the list of the trusted devices within the trusted network. Public keys can be used for devices as well as for applications. These public keys are used for setting up the initial connection between the different devices of the trusted network. Based on the certificate, the rights that an application of one of the devices has can then be enforced by the other parties. All trusted devices communicating within the network actually have the same certificate that contains all the trusted public keys.
- A reference 24 to the previous certificate in the linear chain of certificates, for example a hash from the previous certificate: this assures a non-breakable linear structure among the devices; e.g. a blockchain mechanism can be used for that. For the first certificate of the linear chain of certificates, the root certificate, a self-signed certificate may be used. For example, an application in a first device of the trusted network is used by a user of the network, e.g. an administrator of the network, to make a hash by using its private key, which hash is included as the reference 24 in the hash field of the root certificate.
- A signature 25 of a valid signing authority, as included in the certificate authority list 22.
- Other possible fields 26, which may include a serial number, a version number or a company information, a validity period of the certificate, a public key, etc.

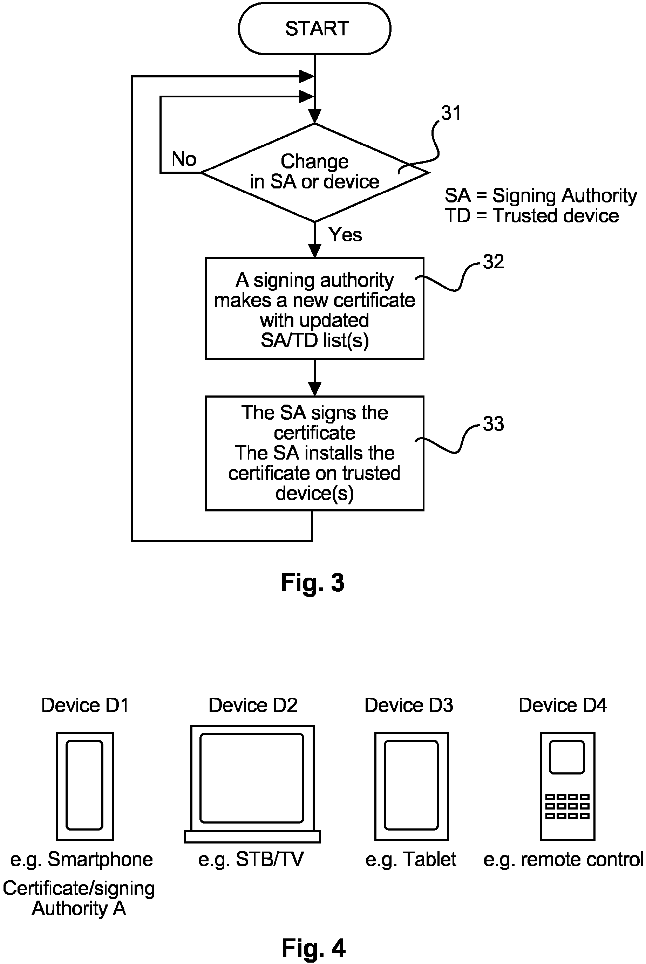

A flow chart illustrating the generation of a new certificate is illustrated in figure 3. The reason for making a new certificate may be a change of the trusted devices in the network: for example, a new trusted device has to be included in the network or one of the trusted devices got untrusted. Another reason is a change of the signing authorities: e.g. a new signing authority has to be included in the certificates for the network, or one of the signing authorities got untrusted and has to be deleted. If such a reason occurs and a new certificate is required, 31, a signing authority, as included in the certificate authority list 22, makes a new certificate by updating the list of trusted devices in the trust policy 23 and/or by updating the signing authorities, 32, as included in the certificate authority list 22. The signing authority signs then the new certificate and installs the new certificate on the trusted devices of the network, 33.

If the newly generated certificate lists a new trusted device, then the new certificate is installed on the new device to make it a trusted device, and also on all the other trusted devices of the network which want to communicate with the new device. If the new certificate is made because a new signing authority is included or a device got untrusted, then the new certificate has to be installed on all trusted devices of the network to inform the devices of the change. In general, when two devices of the network start communicating, they first exchange their certificates. In case the certificates are different, then the device keeping the previous, respectively the older certificate will be updated with the more recent certificate of the other device. If the new certificate is made because a device got untrusted, then the new certificate should be installed as fast as possible on all trusted devices of the network, by a signing authority, in order to avoid any communication with the untrusted device.

In the following figures, an example is given how certificates are generated for various devices of a network, and how a trusted network is established including trusted devices by using the certificates. In figure 4, four devices D1-D4 are illustrated, which are used by several users in an environment, for example within a home network. The device D1 is in this embodiment a smartphone. The user of the device D1 is an administrator of the home network, acting as a signing authority A. The devices D2-D4 are in this example a television set, a tablet PC and a remote control.

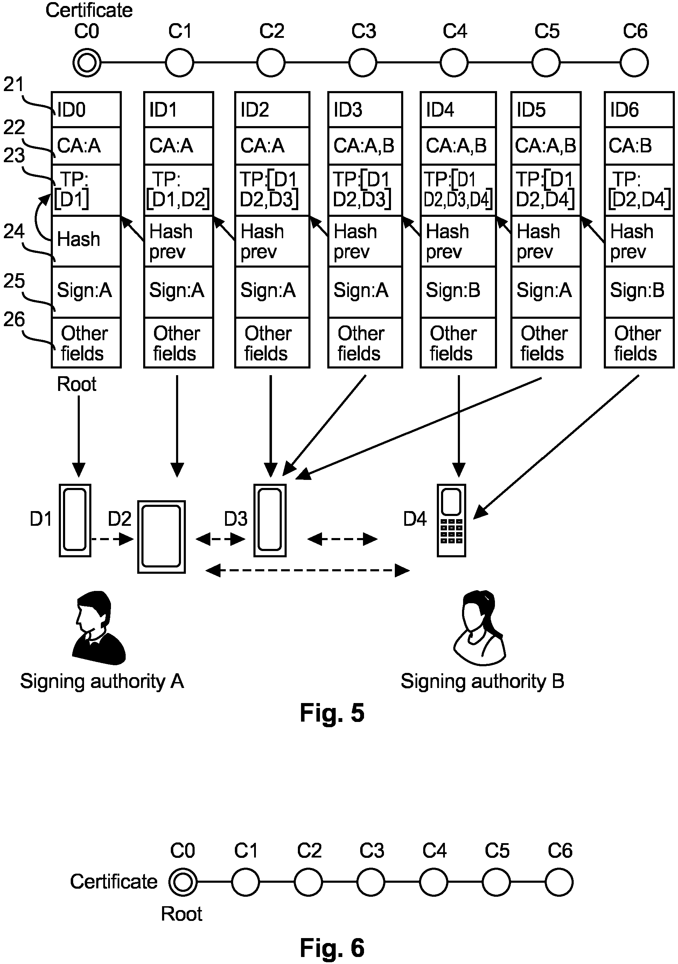

To establish a trusted network for the devices D1-D4, the administrator as the signing authority A makes a first certificate C0, which is the root certificate for the trusted network. Starting with the root certificate C0, a multitude of certificates are generated, as explained with regard to figure 5: a linear chain of certificates C0-C6 is generated for the devices D1-D4 of the network, wherein the certificate C0 is the root certificate of the linear chain. The abbreviations used in figure 5 correspond with the expressions as used and explained with regard to figure 2:
- ID: Certificate identifier
- CA: Certificate Authority
- TP: Trust Profile
- Hash prev: a hash of the previous certificate
- Sign: Signature of a signing authority

The following events are happening in this embodiment (the numbering C0-C6 in figure 5 is conform to the certificate number):
0. In the first step, the administrator of the home network starts the procedure by making the first certificate C0 as the signing authority A. He uses for example his device D1 for making the certificate C0. The certificate C0 has the certificate identifier ID0, field 21, the trust policy, field 23, includes reference to the device D1, e.g. a public key of the device D1, and the signing authority A is included in the field: certificate authority list, field 22. The hash is made on this first certificate C0, since there is no previous certificate, and included in field 24. For example the hash is made on the public key of device D1, as included in field 23. Finally, he signs himself the certificate C0 as the Certificate Authority A, field 25, and he installs the certificate C0 on his device D1.
1. Now, the administrator is claiming the device D2 for the network: he makes a new certificate C1 having the certificate identifier ID1 (=ID0+1), includes the device D2 in field 23, generates a hash based on the previous certificate C0, includes the new hash in the field 24, signs it as the signing authority A and installs the certificate C1 on the device D2. The trust profile TP includes now the devices D1 and D2. From such installation onwards, the installed certificate C1 is the root of trust for the devices D1 and D2. The devices D1, D2 don't care about any previously issued certificates, here certificate C0.
2. Now the administrator is claiming device D3: he makes a new certificate C2 with ID2 (=ID1+1), includes the device D3 in field 23 and a new hash in the field 24, signs it as the signing authority A and installs it on the device D3, and also on the devices D1 and D2, if they are both available. The hash is based on the previous certificate. This is the latest certificate at that moment.
   The trust profile TP of the certificate C2 says that the devices D1, D2 and D3 can be trusted. The trust profile is in a preferred embodiment a list of public keys, representing the trusted devices D1, D2 and D3. All devices D1-D3 actually have the same certificate C2 that contains all the trusted public keys in the same certificate. This is an efficient policy, other types of policies may be used also.
3. It is supposed that the device D2 was not available during event 2. So the certificate C2 was only updated in the devices D1 and D3. When D2 and D3 are trying to setup a secure communication channel, they will use a Signature Algorithm, such as a Diffie-Hellman Digital Signature Algorithm (DH-DSA), signed session in which they exchange their certificates with each other in a secure manner. DH-DSA allows a secure key exchange and authentication, as known from prior art. The device D2 will then see that it's installed certificate C1 is outdated. It can check that the certificate C2 of D3 is more recent by validating the chain until the locally installed root certificate C0 by analyzing the hash included in the certificate C2. If the new certificate C2 of D3 is validated, D2 can safely replace its locally installed certificate C1 with the later one from device D3, certificate C2. D2 will exchange the new certificate again with D3. Only when the exchanged certificates are the same, trust will be established between both devices D2, D3.
4. The administrator now wants to include another user as a trusted certificate authority for the network, e.g. as a signing authority B. So the administrator makes a new certificate C3 as described before, but indicating A and B as a the signing authorities A and B in the field 22. The trusted devices are still D1, D2 and D3.
5. The other user as the signing authority B now wants to add her device D4 to the network. He makes as the signing authority B a new certificate C4 with the certificate identifier ID4 and indicating that the trusted devices are D1, D2, D3 and D4, field 23. He makes a hash based on the hash of the previous certificate C3, and finally, he signs the certificate C4 as the signing authority B, field 25. The other user installs the certificate C4 on the device D4. When D4 wants to communicate to the devices D1, D2 and/or D3, their certificates are exchanged, and D1, D2, D3 update their certificate to the last one, certificate C4, indicating that the devices D1-D4 are trusted devices that can securely communicate among each other.
6. If the device D3 is removed from the network, e.g. the device D3 is stolen, with certificate C4 on it: There are now no longer any trust relations within the network. So the administrator as the signing authority A makes a new certificate C5 with the certificate identifier ID5, by keeping the devices D1, D2 and D4 in the list, but device D3 is removed from the list. This new certificate C5 is installed on all available devices by the administrator, supposedly devices D1, D2 and/or D4. Possible devices, not being available at the certificate update, get the new certificate C5 when communication happens between them and a device that has already the updated certificate C5. Previous certificates are updated then with this new one. All remaining devices of the network, D1, D2 and D4, know finally that device D3 is no longer trusted. No communication is possible with the device D3, even if it would be brought back into the network.
   For security reasons, it is advisable in this case to update all devices of the network immediately, and not just one or some devices, to inform all devices that device D3 is no longer trusted. But the described mechanism allows also for communication between devices, respectively applications of devices, that were not available at the time of update of the latest certificate.
7. Now something happens, e.g. the administrator, the signing authority A, is moving to a new house, so that the signing authority A is no longer trusted. The signing authority A must be removed therefore from the certificate authority list, field 22. So the signing authority B makes a new certificate C6 with certificate identifier ID6, wherein the signing authority A is no longer in the list of trusted certificate authorities. In addition, the device D1 is removed from the trust profile TP, field 23. The certificate C6 still indicates that the devices D2 and D4 are trusted.
   The new certificate C6 is installed for example on the device D2. When device D4 communicates with device D2, device D4 updates its certificate with the certificate C6. The devices D2 and D4 can now securely communicate. The devices D2 and D4 will no longer accept newly signed certificates from the signing authority A, even if A was the one generating the root certificate C0 and claiming the first device or application.

In the described example, therefore a linear chain structure of certificates is generated, certificates C0-C6, without forks, as illustrated in figure 6, wherein always the latest certificate is valid over the older ones. Only devices of the network having the latest certificate are allowed to communicate with each other. Therefore, a secured network can be established with the method. Trust can be easily re-established, in case of a device or signing authority becomes untrusted. A new signing authority can be added or removed easily by generating a new certificate for the devices of the network.

Although embodiments which incorporate the teachings of the present disclosure have been shown and described in detail herein, those skilled in the art can readily devise many other varied embodiments that still incorporate these teachings. Having described preferred embodiments (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure.

## Claims

1. A network comprising devices (D1-D4), at least one certificate authority (A, B) and certificates (20, C0-C6) to establish a secured communication between the devices, the certificates including a reference (23) to the devices and an identity reference (21, 24) including a value (ID0-ID6) to establish a chronological history of the certificates, wherein
the latest certificate is valid over the previous certificates, and
the devices are enabled to communicate with each other by using the latest certificate.

2. The network of claim 1, wherein, when two devices of the network start communicating, they first exchange their certificates, and in case their certificates are different, then the device having the previous certificate will be updated with the newer certificate of the other device, to enable the secured communication between the two devices.

3. The network of claim 1 or 2, wherein the certificates include further one or more valid certificate authorities (22), a trust policy (23) including the reference (23) to the devices and indicating the trusted devices of the network, a reference (24) to the previous certificate, e.g. a hash based on the previous certificate, and/or a signature (25) of the certificate authority issuing the certificate, and wherein the identity reference (21, 24) is a certificate identifier (21) or the hash based on the previous certificate.

4. The network of claim 1, 2 or 3, wherein the certificates represent a linear chain structure of certificates based on the certificate identifier or on the reference to the previous certificate, the linear chain structure reflecting the chronological history.

5. The network of one of the preceding claims, wherein a new certificate is generated by the certificate authority and distributed to devices of the network in case of: a new device has to be included to the network or removed from the network, and a new certificate authority has to be included to the secured network or removed from the secured network.

6. The network of claim 5, wherein a new certificate is generated by the certificate authority and
a new certificate authority is provided for the network by including the new certificate authority in the certificate authority list of the new certificate, or
a certificate authority is removed from the certificate authority list of the present certificate, in case the certificate authority got untrusted, or
a new device is included in the network by including the new device in the list of trusted devices of the new certificate, or
an unsecure device is removed from the list of trusted devices of the present certificate.

7. A method for establishing a secured communication for a first device, the first device having a first certificate, wherein the first certificate includes an identity reference (21, 24) comprising a value to establish a chronological history of certificates, the method comprising:
sending the certificate of the first device to a second device having a second certificate, to exchange their certificates,
receiving the second certificate in the first device,
analysing the second certificate in the first device, and in case of
• the first certificate is older than the second certificate: replacing its certificate in the first device with the second certificate, and starting a secured communication with the second device,
• the second certificate is older than the first certificate: waiting until the second device has replaced its certificate with the first certificate, to enable a secured communication with the second device, and
• both certificates are valid: starting a secured communication with the second device.

8. The method of claim 7, wherein the two devices are included in a network, and the method further comprising: generating a new certificate in the first device by a certificate authority and distributing the new certificate to the second devices in case of: a new device has to be included to the network or removed from the network, and a new certificate authority has to be included to the secured network or removed from the network.

9. The method of claim 8, comprising: providing a new certificate authority for the network by generating a new certificate in the first device and including the new certificate authority in the certificate authority list 22, and removing a certificate authority by generating a new certificate in the first device and removing the certificate authority from the certificate authority list, in case the certificate authority got untrusted.

10. The method of claim 8 or 9, comprising: including a new device in the network by generating a new certificate in the first device and including the new device in the list of trusted devices, and removing an unsecure device by generating a new certificate in the first device and removing the unsecure device from the list of trusted devices.

11. The method of claim 8, 9 or 10, comprising: generating a new certificate in the first device and signing the new certificate by the certificate authority.

12. A device (D1-D4) including a processor being adapted to perform a method according to one of the preceding method claims.

13. A certificate (20, C0-C6) for providing a secured communication between trusted devices of a network, including
one or more certificate authorities (22),
a reference (23) to all of the trusted devices of the network,
an identity reference (21, 24) including a value establishing a chronological history of certificates,
and
a signature (25) of the certificate authority issuing the certificate.

14. A computer program comprising executable program code for performing a method according to one of the preceding method claims.

15. A non-transitory program storage medium, readable by a processor and comprising executable program code for performing a method according to one of the preceding method claims.
